# EUROPEAN PATENT APPLICATION

(11) **EP 2 739 039 A2**
(43) Date of publication of application: **04.06.2014**
(21) Application number: 13171406.5
(22) Date of filing: 11.06.2013
(51) Int. Cl.: H04N 5/445

(54) **Electronic device with multi-axis operation interface and information display method**

(30) Priority: 30.11.2012 TW 101144953
(71) Applicant: Wistron Corporation, New Taipei City 221 (TW)
(72) Inventor: Chuang, Ching-Yuan, 221 New Taipei City (TW); Chen, Li-Hsuan, 221 New Taipei City (TW); Chang, Hui-Liang, 221 New Taipei City (TW)
(74) Representative: Becker Kurig Straus

(57) **Abstract**

An electronic device (1) includes a storage module (12) for storing a plurality of first information items and a plurality of second information items; a display module (14) for displaying a multi-axis operation interface (10, 10'), which includes a plurality of first information display regions (100), a plurality of second information display regions (102) and a common display region (104), the first information display regions (100) being arranged along a first axis (Y) and used for displaying the first information items, the second information display regions (102) being arranged along a second axis (X) and used for displaying the second information items, the first axis (Y) intersecting the second axis (X) at the common display region (104); and a control unit (18) for controlling the first information items to move along the first axis (Y) or controlling the second information items to move along the second axis (X).

## Description

### Field of the Invention

The invention relates to an electronic device with a multi-axis operation interface and an information display method according to the pre-characterizing clauses of claims 1 and 8.

### Background of the Invention

As the internet is getting more and more popular, there are more and more choices when watching TV. A user not only can watch digital channels, but he can also obtain lots of programs and videos from the internet via a TV. So far, a conventional TV only displays information for a current channel/program (e.g. channel name, channel number, program name, program introduction, etc.) and the next program name, such that the user may be confused with what the current program name is sometimes. Furthermore, if the user wants to watch videos from the internet, he/she has to view lots of lists first and then select the desired video therefrom. After watching the video, he/she has to get back to the original list to select other videos. The aforesaid operation is minute and complicated.

### Summary of the Invention

This in mind, the present invention aims at providing an electronic device with a multi-axis operation interface and an information display method, thereby resolving the aforesaid problems.

This is achieved by an electronic device with a multi-axis operation interface according to claim 1 and an information display method according to claim 8. The dependent claims pertain to corresponding further developments and improvements.

As will be seen more clearly from the detailed description following below, the claimed electronic device includes a storage module, a display module, an input module and a control unit. The storage module is used for storing a plurality of first information items and a plurality of second information items corresponding to each of the first information items. The display module is used for displaying a multi-axis operation interface. The multi-axis operation interface includes a plurality of first information display regions, a plurality of second information display regions and a common display region. The first information display regions are arranged along a first axis and used for displaying the first information items. The second information display regions are arranged along a second axis and used for displaying the second information items. The first axis intersects the second axis at the common display region, wherein when an i-th first information item of the first information items is displayed in the common display region, the second information display regions and the common display region display the second information items corresponding to the i-th first information item, and i is a positive integer. The input module is used for inputting an operation command. The control unit is electrically connected to the storage module, the display module and the input module. The control unit is used for controlling the first information items to move along the first axis within the first information display regions and the common display region or controlling the second information items to move along the second axis within the second information display regions and the common display region according to the operation command.

As will be seen more clearly from the detailed description following below, the claimed information display method includes steps of storing a plurality of first information items and a plurality of second information items corresponding to each of the first information items; displaying a multi-axis operation interface, wherein the multi-axis operation interface includes a plurality of first information display regions, a plurality of second information display regions and a common display region, the first information display regions are arranged along a first axis and used for displaying the first information items, the second information display regions are arranged along a second axis and used for displaying the second information items, the first axis intersects the second axis at the common display region, when an i-th first information item of the first information items is displayed in the common display region, the second information display regions and the common display region display the second information items corresponding to the i-th first information item, and i is a positive integer; inputting an operation command; and controlling the first information items to move along the first axis within the first information display regions and the common display region or controlling the second information items to move along the second axis within the second information display regions and the common display region according to the operation command.

### Brief Description of the Drawings

In the following, the invention is further illustrated by way of example, taking reference to the accompanying drawings thereof:
FIG. 1 is a functional block diagram illustrating an electronic device with a multi-axis operation interface according to an embodiment of the invention,
FIG. 2 is a schematic diagram illustrating the multi-axis operation interface shown in FIG. 1,
FIG. 3 is a schematic diagram illustrating the first information item shown in FIG. 2 moving along the first axis upward,
FIG. 4 is a schematic diagram illustrating the second information item shown in FIG. 3 moving along the second axis leftward,
FIG. 5 is a flowchart illustrating an information display method according to an embodiment of the invention, and
FIG. 6 is a schematic diagram illustrating a multi-axis operation interface according to another embodiment of the invention.

### Detailed Description

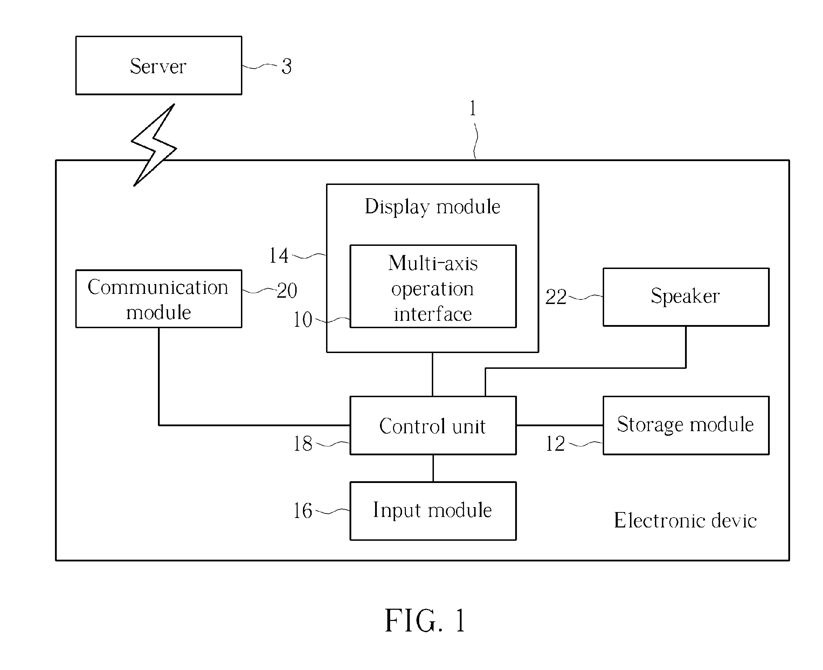

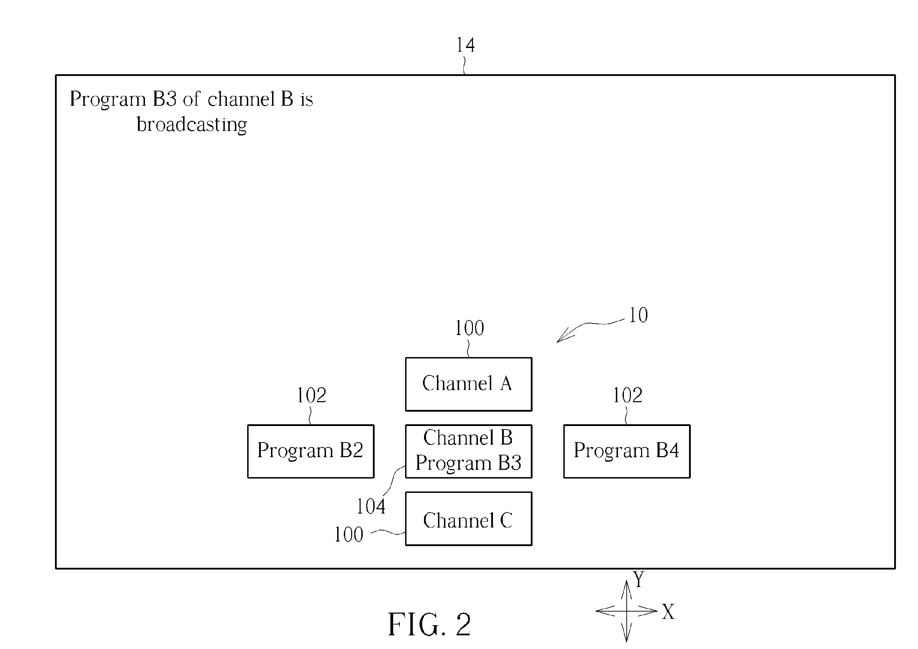

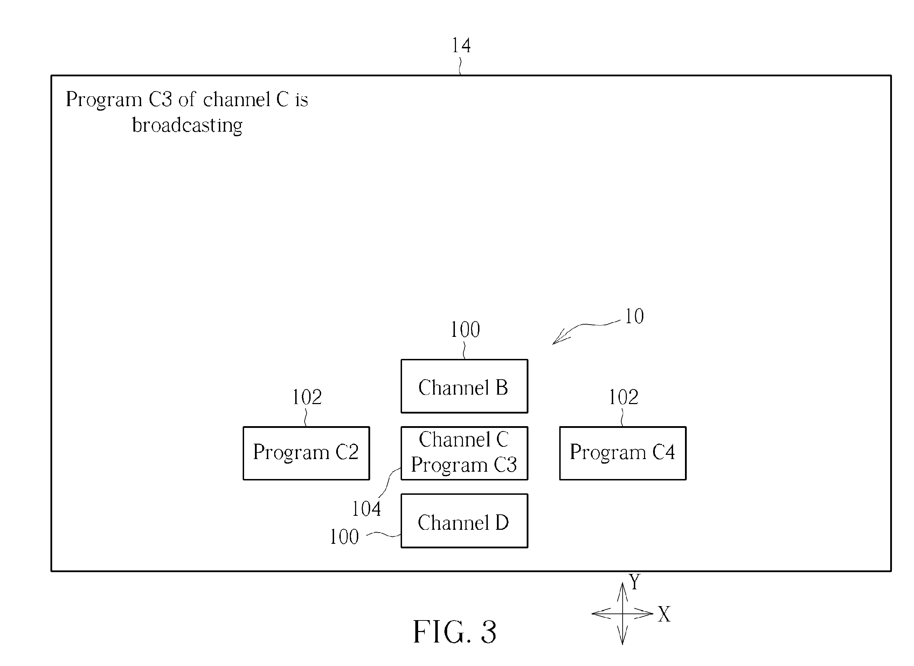

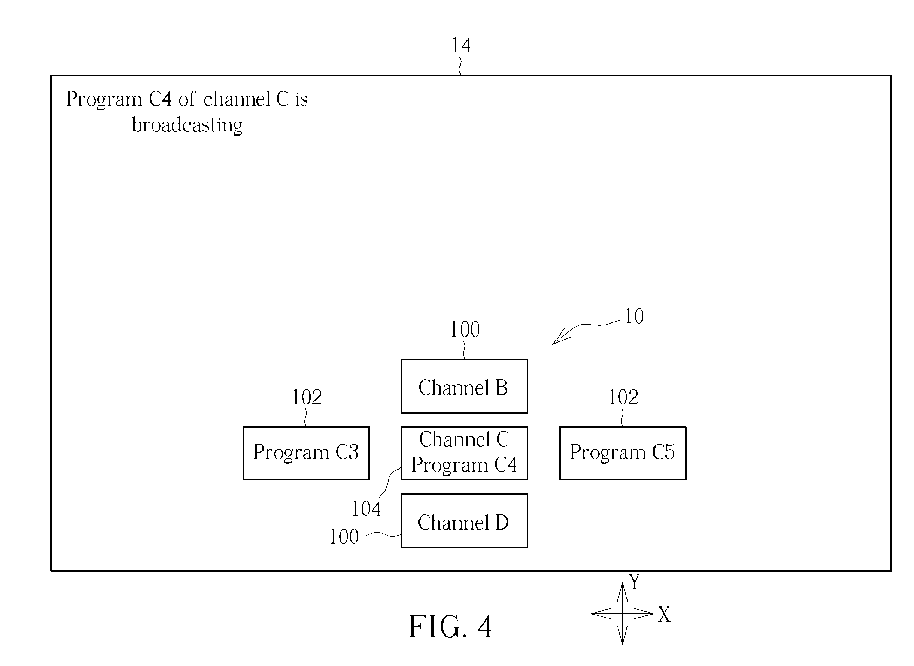

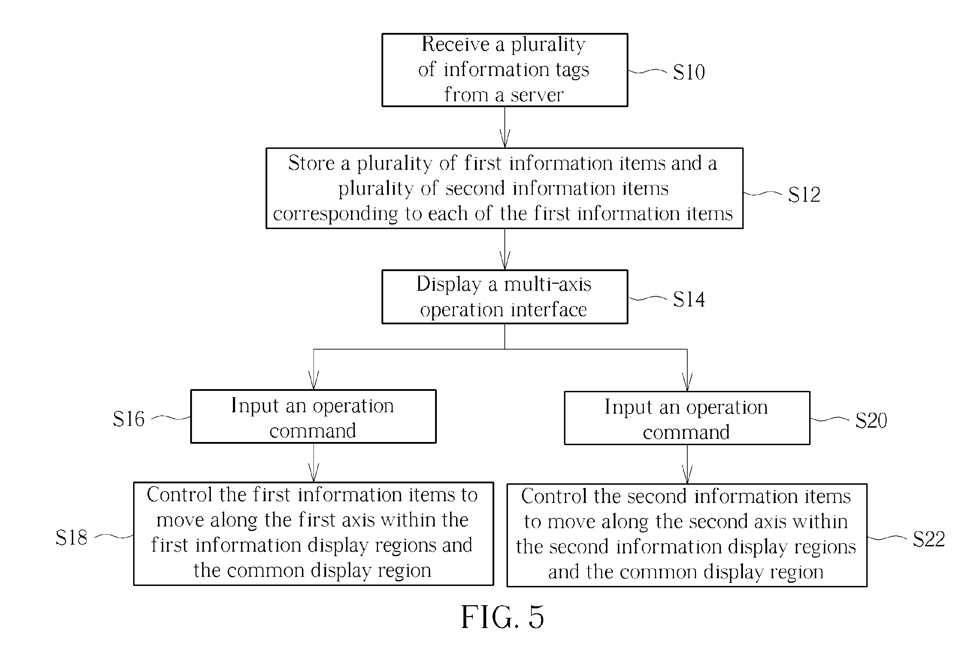

Referring to FIGs. 1 to 5, FIG. 1 is a functional block diagram illustrating an electronic device 1 with a multi-axis operation interface 10 according to an embodiment of the invention, FIG. 2 is a schematic diagram illustrating the multi-axis operation interface 10 shown in FIG. 1, FIG. 3 is a schematic diagram illustrating the first information item shown in FIG. 2 moving along the first axis Y upward, FIG. 4 is a schematic diagram illustrating the second information item shown in FIG. 3 moving along the second axis X leftward, and FIG. 5 is a flowchart illustrating an information display method according to an embodiment of the invention. The information display method shown in FIG. 5 can be implemented by the electronic device 1 shown in FIG. 1.

The electronic device 1 of the invention may be a TV, personal computer, flat computer, notebook, mobile phone, personal digital assistant, or other electronic devices equipped with a display. As shown in FIG. 1, the electronic device 1 comprises a storage module 12, a display module 14, an input module 16, a control unit 18, a communication module 20 and a speaker 22, wherein the control unit 18 is electrically connected to the storage module 12, the display module 14, the input module 16, the communication module 20 and the speaker 22. In practical applications, the storage module 12 may be a hard disc, memory or other device capable of storing data; the display module 14 may be a liquid crystal display device or other display devices; the input module 16 may be a controller, keyboard, mouse, microphone, camera, touch panel or a combination thereof; the control unit 18 may be a processor or controller with data calculating/processing function; the communication module 20 may communicate with a server 3 in a wired or wireless manner, wherein the aforesaid wired or wireless communication manner is well known by one skilled in the art, so the related art will not depicted herein. In general, the electronic device 1 may be further equipped with some necessary hardware or software components for specific purposes, such as a power supply, an operating system, application programs, etc., and it depends on practical applications.

The communication module 20 may receive a plurality of information tags from a server 3 (step S10 in FIG. 5), wherein each of the information tag records a first information item and a plurality of second information items corresponding to the first information item. In this embodiment, the information tags may be, but not limited to, RSS tags, ATOM tags or a combination thereof. In general, the information tags are made by a service provider (SP) and the service provider places a plurality of links of the information tags in the server 3 for a user to be able to subscribe his/her desired information items. It should be noted that the formats of RSS and ATOM tags are well known by one skilled in the art, so the related art will not be depicted herein. In practical applications, after receiving the information tags, the control unit 18 may read the information items recorded in the information tags through a reader (e.g. RSS reader or ATOM reader) correspondingly.

The storage module 12 is used for storing a plurality of first information items and a plurality of second information items corresponding to each of the first information items (step S12 in FIG. 5). For example, if the multi-axis operation interface 10 is used for displaying channel/program information items, the first information items may be channel information items (e.g. channel name, channel description, etc.) and the second information items may be program information items (e.g. program name, program description, program thumbnail, etc.). Referring to table 1 here below, channel-program information items are used to describe the relation between the first information items and the second information items for example. It should be noted that the first information items and the second information items shown in table 1 may be updated by receiving the information tags continuously. Furthermore, in another embodiment, the first information items and the second information items may be built in the storage module 12 such that the aforesaid step S10 may be omitted accordingly.

**Table 1**

| First information item | Second information item | | | | | |
|---|---|---|---|---|---|---|
| Channel A | Program A1 | Program A2 | Program A3 | Program A4 | Program A5 | Program A6 |
| Channel B | Program B1 | Program B2 | Program B3 | Program B4 | Program B5 | |
| Channel C | Program C1 | Program C2 | Program C3 | Program C4 | Program C5 | Program C6 |
| Channel D | Program D1 | Program D2 | Program D3 | Program D4 | | |
| Channel E | Program E1 | Program E2 | Program E3 | Program E4 | Program E5 | |

The display module is used for displaying a multi-axis operation interface 10 (step S14 in FIG. 5), wherein the multi-axis operation interface 10 comprises a plurality of first information display regions 100, a plurality of second information display regions 102 and a common display region 104, the first information display regions 100 are arranged along a first axis Y and used for displaying the aforesaid first information items, the second information display regions 102 are arranged along a second axis X and used for displaying the aforesaid second information items, and the first axis Y intersects the second axis X at the common display region 104. As shown in FIGs. 2 to 4, the multi-axis operation interface 10 comprises two first information display regions 100 and two second information display regions 102, wherein the two first information display regions 100 are arranged at opposite sides of the common display region 104 linearly and the two second information display regions 102 are arranged at another opposite sides of the common display region 104 linearly, such that the multi-axis operation interface 10 is crisscrossed. It should be noted that the number and arrangement of the first information display regions 100 and the second information display regions 102 can be determined based on practical applications and are not limited to the embodiment shown in FIGs. 2 to 4. In other words, the invention may dispose more than two first information display regions 100 at upper and lower sides of the common display region 104 and dispose more than two second information display regions 102 at left and right sides of the common display region 104. Furthermore, the multi-axis operation interface 10 may be X-shaped or other shapes except crisscrossed shape. In another embodiment, the first information display regions 100 may be also arranged along the second axis X and the second information display regions 102 may be also arranged along the first axis Y according to practical applications.

In this embodiment, when an i-th first information item of the first information items is displayed in the common display region 104, the second information display regions 102 and the common display region 104 display the second information items corresponding to the i-th first information item, wherein i is a positive integer. As shown in FIG. 2 and table 1, the information item of channel B (i.e. first information item) is displayed in the common display region 104, so the second information display regions 102 and the common display region 104 display the information items of programs B2, B3 and B4 (i.e. second information items) corresponding to channel B, wherein the channel information item may comprise channel name, channel description, channel issued date, channel title and so on, and the program information item may comprise program name, program type, program description, program thumbnail, program link, program issued date, program title and so on. The first and second information items may be default or adjusted by the user.

In this embodiment, when the i-th first information item and a j-th second information item of the second information items corresponding to the i-th first information item, are displayed in the common display region 104, the control unit 18 controls the display module 14 to display an image corresponding to the i-th first information item and the j-th second information item and/or the control unit 18 controls the speaker 22 to broadcast a sound corresponding to the i-th first information item and the j-th second information item, wherein j is a positive integer. As shown in FIG. 2, the information item of channel B (i.e. first information item) and the information item of program B3 (i.e. second information item) corresponding to channel B are displayed in the common display region 104, so the control unit 18 downloads the program B3 of the channel B from the server 3 through the program link and controls the display module 14 to display an image corresponding to the program B3 of the channel B and/or controls the speaker 22 to broadcast a sound corresponding to the program B3 of the channel B. For example, if the program B3 of the channel B is a video, the control unit 18 will control the display module 14 and the speaker 22 to display the video and broadcast the sound of the video; if the program B3 of the channel B is music, the control unit 18 will control the speaker 22 only to broadcast the music.

When the user wants to browse the previous first information item (e.g. the channel A in FIG. 2) or the next first information item (e.g. the channel C in FIG. 2), he/she can operate the input module 16 to input an operation command (step S16 in FIG. 5) to control the current first information item (e.g. the channel B in FIG. 2) to move along the first axis Y upward and downward, so as to browse and select the desired first information item. In this embodiment, the input module 16 may be a controller, keyboard, mouse, microphone, camera, touch panel or a combination thereof, such that the user may control the current first information item (e.g. the channel B in FIG. 2) to move along the first axis Y upward and downward through press operation, drag operation, voice input, gesture input and so on and then browse and select the desired first information item.

As shown in FIG. 3, after the user operates the input module 16 to input a moving-upward operation command, the control unit 18 will control the first information items to move along the first axis Y within the first information display regions 100 and the common display region 104 (step S18 in FIG. 5). At this time, the original channel B and program B3 displayed in the common display region 104 will be changed to the information items of channel C and program C3, and the second information display regions 102 at left and right sides of the common display region 104 will be changed to the information items of programs C2 and C4 of channel C. It should be noted that after changing the channel B to the channel C, the newest program of the channel C may be displayed by default in the common display region 104 or that the last displayed program will be displayed by default in the common display region 104.

When the user wants to browse the previous second information item (e.g. the program C2 in FIG. 3) or the next second information item (e.g. the program C4 in FIG. 3), he/she can operate the input module 16 to input an operation command (step S20 in FIG. 5) to control the current second information item (e.g. the program C3 in FIG. 3) to move along the second axis X leftward and rightward, so as to browse and select the desired second information item. Similarly, the user may control the current second information item (e.g. the program C3 in FIG. 3) to move along the second axis X leftward and rightward through press operation, drag operation, voice input, gesture input and so on and then browse and select the desired second information item.

As shown in FIG. 4, after the user operates the input module 16 to input a leftward-moving operation command, the control unit 18 will control the second information items to move along the second axis X within the second information display regions 102 and the common display region 104 (step S22 in FIG. 5). At this time, the original information item of program C3 displayed in the common display region 104 will be changed to the information item of program C4.

Besides the aforesaid channel-program information items, the multi-axis operation interface 10 of the invention may be also used to display other information items. For example, the first information items may be application program information items (e.g. application program name, application program description, etc.) and the second information items may be version information items (e.g. version level, version issued date, etc.). Referring to Table 2 in the following, application program-version information items are used to describe the relation between the first information items and the second information items for example.

**Table 2**

| First information item | Second information item | | | | | |
|---|---|---|---|---|---|---|
| Application program A | Version A1 | Version A2 | Version A3 | Version A4 | Version A5 | |
| Application program B | Version B1 | Version B2 | Version B3 | | | |
| Application program C | Version C1 | Version C2 | Version C3 | Version C4 | Version C5 | |
| Application program D | Version D1 | Version D2 | Version D3 | Version D4 | Version D5 | Version D6 |

Furthermore, the first information items may be musical album information items (e.g. album name, singer name, number of songs, etc.) and the second information items may be song information items (e.g. song name, broadcasting time, etc.). Referring to Table 3 in the following, musical album-song information items are used to describe the relation between the first information items and the second information items for example.

**Table 3**

| First information item | Second information item | | | | | |
|---|---|---|---|---|---|---|
| Musical album A | Song A1 | Song A2 | Song A3 | | | |
| Musical album B | Song B1 | Song B2 | Song B3 | Song B4 | Song B5 | Song B6 |
| Musical album C | Song C1 | Song C2 | Song C3 | Song C4 | Song C5 | |
| Musical album D | Song D1 | Song D2 | Song D3 | Song D4 | Song D5 | |
| Musical album E | Song E1 | Song E2 | Song E3 | Song E4 | Song E5 | Song E6 |
| Musical album F | Song F1 | Song F2 | Song F3 | Song F4 | Song F5 | Song F6 |

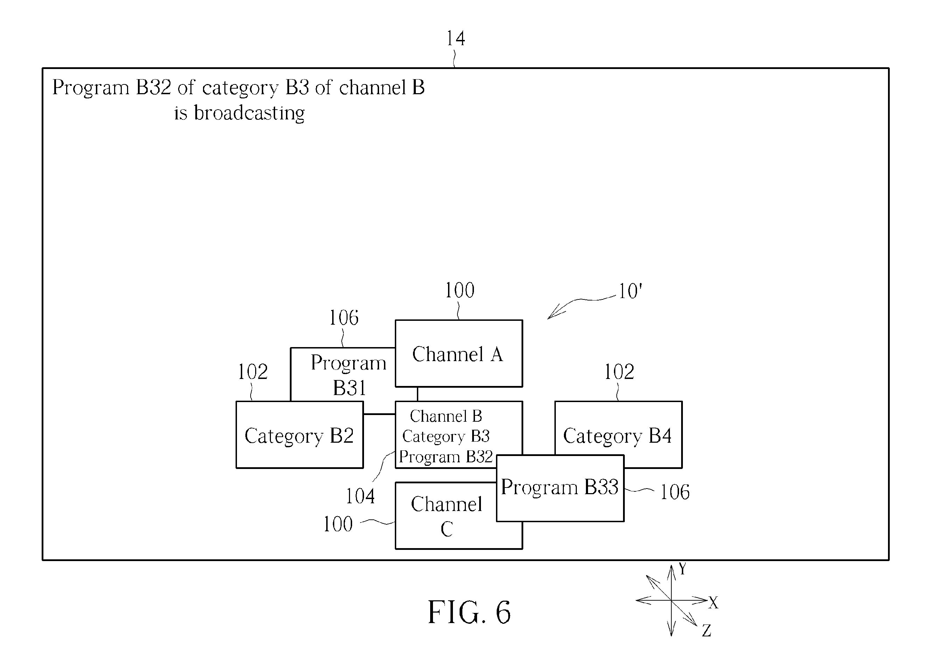

Referring to FIG. 6, FIG. 6 is a schematic diagram illustrating a multi-axis operation interface 10' according to another embodiment of the invention. The main difference between the multi-axis operation interface 10' and the aforesaid multi-axis operation interface 10 is that the multi-axis operation interface 10' further comprises a plurality of third information display regions 106, wherein the third information display regions 106 are arranged along a third axis Z so that the first axis Y, the second axis X and the third axis Z intersect at the common display region 104. In this embodiment, the storage module 12 further stores a plurality of third information items corresponding to each of the second information items and the third information display regions 106 are used for displaying the third information items.

For example, if the multi-axis operation interface 10' is used for displaying channel-category-program information items, the first information items may be channel information items (e.g. channel name, channel description, etc.), the second information items may be category information items (e.g. program category, number of programs, etc.), and the third information items may be program information items (e.g. program name, program description, program thumbnail, etc.). Referring to Tables 4-1 and 4-2 in the following, channel-category-program information items are used to describe the relation between the first information items, the second information items and the third information items for example.

**Table 4-1**

| First information item | Second information item | | | | | |
|---|---|---|---|---|---|---|
| Channel A | Category A1 | Category A2 | Category A3 | | | |
| Channel B | Category B1 | Category B2 | Category B3 | Category B4 | Category B5 | |
| Channel C | Category C1 | Category C2 | Category C3 | Category C4 | Category C5 | Category C6 |
| Channel D | Category D1 | Category D2 | Category D3 | Category D4 | | |
| Channel E | Category E1 | Category E2 | Category E3 | Category E4 | Category E5 | |

**Table 4-2**

| Second information item | Third information item | | | | | |
|---|---|---|---|---|---|---|
| Category A1 | Program A11 | Program A12 | Program A13 | Program A14 | Program A15 | Program A16 |
| Category A2 | Program A21 | Program A22 | Program A23 | Program A24 | Program A25 | |
| Category A3 | Program A31 | Program A32 | Program A33 | Program A34 | Program A35 | Program A36 |
| ... | ... | ... | ... | ... | ... | ... |
| Category B3 | Program B31 | Program B32 | Program B33 | Program B34 | | |
| ... | ... | ... | ... | ... | ... | ... |
| Category E5 | Program E51 | Program E52 | Program E53 | Program E54 | Program E55 | |

As shown in FIG. 6, besides the aforesaid first information display regions 100 and second information display regions 102, the multi-axis operation interface 10' further comprises two third information display regions 106 arranged at front and rear sides of the common display region 104 linearly, such that the multi-axis operation interface 10' is three-dimensional. It should be noted that the number of the third information display regions 104 can be determined based on practical applications and is not limited to the embodiment shown in FIG. 6.

In this embodiment, when a j-th second information item of the second information items is displayed in the common display region 104, the third information display regions 106 and the common display region 104 display the third information items corresponding to the j-th second information item, wherein j is a positive integer. As shown in FIG. 6, tables 4-1 and table 4-2, the information item of channel B (i.e. first information item) is displayed in the common display region 104, so the second information display regions 102 and the common display region 104 display the information items of categories B2, B3 and B4 (i.e. second information items) corresponding to the channel B; the information item of category B3 (i.e. second information item) is displayed in the common display region 104, so the third information display regions 106 and the common display region 104 display the information items of programs B31, B32 and B33 (i.e. third information items) corresponding to the category B3. As the operation principle mentioned in the above, the control unit 18 will control the third information items to move along the third axis Z within the third information display regions 106 and the common display region 104 according to the operation command inputted by the user.

It should be noted that the multi-axis operation interface 10 shown in FIGs. 2 to 4, the multi-axis operation interface 10' shown in FIG. 6, and the control logics of the information display method shown in FIG. 5 can be implemented by software. The software can be executed in any electronic devices with data processing function, such as TV, personal computer, flat computer, mobile phone, personal digital assistant, and so on. It is reasonably expected that each part or function of the control logics may be implemented by software, hardware or the combination thereof. Moreover, the control logics of the information display method shown in FIG. 5 can be embodied by a computer readable storage medium, wherein the computer readable storage medium stores instructions, which can be executed by the electronic device so as to generate control command to execute corresponding function.

As mentioned in the above, the multi-axis operation interface of the invention displays information items along at least two axes for a user. The user can operate the input module to control the first information items (e.g. channel, application program, musical album, etc.) to move along the first axis first (e.g. vertical axis), so as to browse and select the desired first information item. Afterwards, the user can operate the input module again to control the second information items (e.g. program, version, song, etc.) corresponding to the selected first information item to move along the second axis (e.g. horizontal axis), so as to browse and select the desired second information item and display/broadcast images and/or sounds corresponding to the selected first and second information items. In other words, the user can browse and select the desired information rapidly through the multi-axis operation interface of the invention along at least two axes. Accordingly, the operation of the invention is simplified and convenient. Furthermore, the invention may add the third axis or more axes according to practical applications, so as to provide more information items for the user in the multi-axis operation interface.

## Claims

1. An electronic device (1) **characterized by** the electronic device (1) comprising:
a storage module (12) for storing a plurality of first information items and a plurality of second information items corresponding to each of the first information items;
a display module (14) for displaying a multi-axis operation interface (10, 10'), the multi-axis operation interface (10, 10') comprising a plurality of first information display regions (100), a plurality of second information display regions (102) and a common display region (104), the first information display regions (100) being arranged along a first axis (Y) and used for displaying the first information items, the second information display regions (102) being arranged along a second axis (X) and used for displaying the second information items, the first axis (Y) intersecting the second axis (X) at the common display region (104), wherein when an i-th first information item of the first information items is displayed in the common display region (104), the second information display regions (102) and the common display region (104) display the second information items corresponding to the i-th first information item, and i is a positive integer;
an input module (16) for inputting an operation command; and
a control unit (18) electrically connected to the storage module (12), the display module (14) and the input module (16), the control unit (18) being used for controlling the first information items to move along the first axis (Y) within the first information display regions (100) and the common display region (104) or controlling the second information items to move along the second axis (X) within the second information display regions (102) and the common display region (104) according to the operation command.

2. The electronic device (1) of claim 1 further **characterized in that** the first information display regions (100) are arranged at opposite sides of the common display region (104) linearly and the second information display regions (102) are arranged at another opposite sides of the common display region (104) linearly, such that the multi-axis operation interface (10, 10') is crisscrossed.

3. The electronic device (1) of claim 1 further **characterized in that** the electronic device (1) comprises a communication module (20) electrically connected to the control unit (18), the communication module (20) is used for communicating with a server (3) and for receiving a plurality of information tags from the server (3), wherein the first information items and the second information items are recorded in the information tags.

4. The electronic device (1) of claim 3 further **characterized in that** the information tags are RSS tags, ATOM tags or a combination thereof.

5. The electronic device (1) of claim 1 further **characterized in that** when the i-th first information item and a j-th second information item of the second information items corresponding to the i-th first information item are displayed in the common display region (104), the control unit (18) controls the display module (14) to display an image corresponding to the i-th first information item and the j-th second information item, j is a positive integer.

6. The electronic device (1) of claim 1 further **characterized in that** the electronic device (1) comprises a speaker (22) electrically connected to the control unit (18), wherein when the i-th first information item and a j-th second information item of the second information items corresponding to the i-th first information item are displayed in the common display region (104), the control unit (18) controls the speaker (22) to broadcast a sound corresponding to the i-th first information item and the j-th second information item, j is a positive integer.

7. The electronic device (1) of claim 1 further **characterized in that** the storage module (12) stores a plurality of third information items corresponding to each of the second information items, the multi-axis operation interface (10') further comprises a plurality of third information display regions (106), the third information display regions (106) are arranged along a third axis (Z) and used for displaying the third information items, the first axis (Y), the second axis (X) and the third axis (Z) intersect at the common display region (104), when a j-th second information item of the second information items is displayed in the common display region (104), the third information display regions (106) and the common display region (104) display the third information items corresponding to the j-th second information item, j is a positive integer, the control unit (18) is used for controlling the third information items along the third axis (Z) within the third information display regions (106) and the common display region (104) according to the operation command.

8. An information display method **characterized by** comprising:
storing a plurality of first information items and a plurality of second information items corresponding to each of the first information items;
displaying a multi-axis operation interface (10, 10'), wherein the multi-axis operation interface (10, 10') comprises a plurality of first information display regions (100), a plurality of second information display regions (102) and a common display region (104), the first information display regions (100) are arranged along a first axis (Y) and used for displaying the first information items, the second information display regions (102) are arranged along a second axis (X) and used for displaying the second information items, the first axis (Y) intersects the second axis (X) at the common display region (104), when an i-th first information item of the first information items is displayed in the common display region (104), the second information display regions (102) and the common display region (104) display the second information items corresponding to the i-th first information item, and i is a positive integer;
inputting an operation command; and
controlling the first information items to move along the first axis (Y) within the first information display regions (100) and the common display region (104) or controlling the second information items to move along the second axis (X) within the second information display regions (102) and the common display region (104) according to the operation command.

9. The information display method of claim 8 further **characterized in that** the first information display regions (100) are arranged at opposite sides of the common display region (104) linearly and the second information display regions (102) are arranged at another opposite sides of the common display region (104) linearly, such that the multi-axis operation interface (10, 10') is crisscrossed.

10. The information display method of claim 8 further **characterized in that** the information display method comprises:
receiving a plurality of information tags from a server (3), wherein the first information items and the second information items are recorded in the information tags.

11. The information display method of claim 10 further **characterized in that** the information tags are RSS tags, ATOM tags or a combination thereof.

12. The information display method of claim 8 further **characterized in that** the information display method comprises:
when the i-th first information item and a j-th second information item of the second information items corresponding to the i-th first information item are displayed in the common display region (104), displaying an image corresponding to the i-th first information item and the j-th second information item, wherein j is a positive integer.

13. The information display method of claim 8 further **characterized in that** the information display method comprises:
when the i-th first information item and a j-th second information item of the second information items corresponding to the i-th first information item are displayed in the common display region (104), broadcasting a sound corresponding to the i-th first information item and the j-th second information item, wherein j is a positive integer.

14. The information display method of claim 8 further **characterized in that** the multi-axis operation interface (10') comprises a plurality of third information display regions (106), the third information display regions (106) are arranged along a third axis (Z), the first axis (Y), the second axis (X) and the third axis (Z) intersect at the common display region (104), the information display method comprises:
storing a plurality of third information items corresponding to each of the second information items, wherein the third information display regions (106) are used for displaying the third information items, when a j-th second information item of the second information items is displayed in the common display region (104), the third information display regions (106) and the common display region (104) display the third information items corresponding to the j-th second information item, j is a positive integer; and
controlling the third information items to move along the third axis (Z) within the third information display regions (106) and the common display region (104) according to the operation command.
